(19) Europäisches Patentamt
European Patent Office
Office européen des brevets

(11) **EP 3 004 918 B1**

(12) **EUROPÄISCHE PATENTSCHRIFT**

(45) Veröffentlichungstag und Bekanntmachung des Hinweises auf die Patenterteilung:
**04.03.2020   Patentblatt 2020/10**

(21) Anmeldenummer: **14715624.4**

(22) Anmeldetag: **08.04.2014**

(51) Int Cl.:
*G01S 7/02* *(2006.01)*        *G01S 13/32* *(2006.01)*
*G01S 13/34* *(2006.01)*        *G01S 13/38* *(2006.01)*
*G01S 13/536* *(2006.01)*      *G01S 13/87* *(2006.01)*
*G01S 13/93* *(2020.01)*

(86) Internationale Anmeldenummer:
**PCT/EP2014/057019**

(87) Internationale Veröffentlichungsnummer:
**WO 2014/195046 (11.12.2014 Gazette 2014/50)**

(54) **INTERFERENZUNTERDRÜCKUNG BEI EINEM FMCW-RADAR**

INTERFERENCE CANCELLATION IN AN FMCW RADAR

SUPPRESSION D'INTERFÉRENCES DANS UN RADAR FMCW

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2013   DE 102013210256**

(43) Veröffentlichungstag der Anmeldung:
**13.04.2016   Patentblatt 2016/15**

(73) Patentinhaber: **Robert Bosch GmbH**
**70442 Stuttgart (DE)**

(72) Erfinder:
• **SCHOOR, Michael**
  **70195 Stuttgart (DE)**
• **BI, Jingying**
  **71229 Leonberg (DE)**

(56) Entgegenhaltungen:
WO-A1-2010/012801        WO-A1-2013/156012
WO-A2-03/104833          WO-A2-2005/111655
WO-A2-2010/000252        WO-A2-2010/115418
DE-A1-102009 000 468     DE-A1-102010 024 328
DE-A1-102012 212 888

• LUKE H D: "Mismatched filtering of periodic quadriphase and 8-phase sequences", IEEE TRANSACTIONS ON COMMUNICATIONS, IEEE SERVICE CENTER, PISCATAWAY, NJ. USA, Bd. 51, Nr. 7, 1. Juli 2003 (2003-07-01), Seiten 1061-1063, XP011099038, ISSN: 0090-6778, DOI: 10.1109/TCOMM.2003.814207

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

STAND DER TECHNIK

Die Erfindung betrifft die Bestimmung von Abständen und/oder Relativgeschwindigkeiten von Objekten mit einem FMCW-Radar. Insbesondere betrifft die Erfindung einen FMCW-Radarsensor, ein FMCW-Radarsystem mit einem ersten und wenigstens einem zweiten Radarsensor, sowie ein Radarsystem für eine Fahrzeugflotte, umfassend mehrere FMCW-Radarsensoren.

Radarsensoren werden in Kraftfahrzeugen beispielsweise zur Messung der Abstände, Relativgeschwindigkeiten und Azimutwinkel von im Vorfeld des eigenen Fahrzeugs georteten Fahrzeugen oder sonstigen Objekten eingesetzt.

Bei einem FMCW-Radarsensor (Frequency Modulated Continuous Wave) wird die Sendefrequenz eines kontinuierlichen Radarsignals rampenförmig moduliert. Aus einem Empfangssignal wird durch Mischen mit dem Sendesignal ein Basisbandsignal erzeugt, welches dann ausgewertet wird.

Es sind FMCW-Radarsensoren bekannt, die nach dem Verfahren der Chirp-Sequence-Modulation arbeiten, bei dem das Sendesignal wenigstens eine Folge gleichartiger Frequenzmodulationsrampen (Chirps) umfasst. Die Modulationsparameter wie die Rampendauer und der Frequenzhub sowie der Zeitabstand zwischen benachbarten Rampen einer Folge sind innerhalb einer Folge gleich. Dabei erfolgt beispielsweise zunächst eine Trennung der Radarobjekte nach ihren Entfernungen, indem eine erste Fouriertransformation des Basisbandsignals jeweils für die einzelnen Frequenzrampen des Sendesignals erfolgt. Anschließend werden die Spektren der ersten Fouriertransformationen der Frequenzrampen einer Folge als Eingangssignal für eine zweite Fouriertransformation verwendet. Somit erfolgt bei der zweiten Fouriertransformation eine Trennung der Radarobjekte nach ihren Geschwindigkeiten anhand von Änderungen der Phasenlagen über die Folge der Radarechos der einzelnen Frequenzrampen.

WO 2005/111655 A2 beschreibt ein System zum gleichzeitigen Betrieb von mehreren Radarsystemen auf einer gemeinsamen Trägerfrequenz und in demselben geografischen Gebiet. In einem Beispiel können komplementäre Codes für Radarpulse verwendet werden, so dass jedes Radarsystem mit einem eindeutigen Code arbeitet, um das Risiko des Übersprechens zwischen den Radarsystemen wesentlich zu verringern. In einem Beispiel wird ein Radarpuls mit vier sinusartigen Komponenten mit Phasenverschiebungen gemäß einer Zeile einer Frank-Code-4x4-Matrix verwendet, deren Zeilen orthogonal zueinander sind. Die Empfangssignale werden mit einem entsprechenden "matched" Filter verarbeitet und summiert. Ein anderes Beispiel für komplementäre Codes sind Hadamard-Codes. In einem anderen Beispiel wird ein "mismatched" Filter verwendet.

LÜKE H D: "Mismatched filtering of periodic quadriphase and 8-phase sequences", IEEE TRANSACTIONS ON COMMUNICATIONS, IEEE SERVICE CENTER, PISCATAWAY, NJ. USA, Bd. 51, Nr. 7, 1. Juli 2003, Seiten 1061-1063, XP011099038, ISSN: 0090-6778, DOI: 10.1109/TCOMM.2003.814207, beschreibt einen "mismatched filtering"-Ansatz für 4-Phasensequenzen oder 8-Phasensequenzen mit guten Autokorrelationseigenschaften für digitale Modulationsverfahren höherer Ordnung, wobei ein Empfangsfilter von einem "matched" Filter in einer Weise abweicht, dass alle Nebenzipfel der periodischen Kreuzkorrelationsfunktion verschwinden.

Aus DE 10100417 A1 ist ein Pulsradar bekannt, bei der ein Sendesignal gemäß einem Pseudo-Noise-Code durch Amplitudenmodulation, Phasenmodulation oder Frequenzmodulation moduliert wird. In einem Empfangszweig erfolgt eine Modulation mit einem verzögerten Code. Auf der Grundlage der zeitlichen Verzögerung vom Aussenden bis zum Empfangen der Radarimpulse wird auf die Entfernung eines Zielobjektes geschlossen. In weiteren Empfangskanälen werden orthogonale Codes verwendet, die beispielsweise durch Zähler und EXOR-Gatter aus dem Pseudo-Noise-Code erzeugt werden. Dadurch können bei sich überdeckenden Erfassungsbereichen jeweiliger Sensoren nur die entsprechenden Sensoren in einem jeweiligen Empfangskanal ausgewertet werden.

Aus WO 2010/115418 A2 ist ein Radarsystem mit zwei in einer Ebene und in definiertem lateralen Abstand angeordneten Sendeantennen und einer gemeinsamen Empfangsantenne bekannt, bei dem beide Sendeantennen gemäß einem Folge von gleichartigen Frequenzrampen gleichzeitig betrieben werden, wobei ein schaltbarer Invertierer die Phase des Signals der ersten Sendeantenne von Rampe zu Rampe zufällig um 0° oder 180° variiert. Nach einer ersten diskreten Fouriertransformation (DFT) über die Abtastwerte jeder Frequenzrampe wird eine zweite DFT über die Rampenfolge einmal mit einer Phasenkorrektur und einmal ohne Phasenkorrektur berechnet, um zur Gewinnung von Azimut-Information getrennte Spektren für von den jeweiligen Sendeantennen herrührenden Empfangssignale zu erhalten. Im Spektrum eines von einer Sendeantenne stammenden Empfangssignals ergibt bei einer Anzahl von 1024 Rampen je Folge das von der jeweils anderen Sendeantenne stammende Signal ein um etwa 30dB darunter liegendes Rauschen. WO 2010/000252 A2 beschreibt ein ähnliches Radarsystem, bei dem die Phase eines Sendesignals zufällig bestimmt wird.

OFFENBARUNG DER ERFINDUNG

Gegenwärtig zeichnet sich bei der Entwicklung von Fahrerassistenzsystemen und Sicherheitssystemen für Kraftfahrzeuge die Tendenz ab, dass die Anzahl der in einem Fahrzeug eingesetzten Radarsensoren steigt. Dies erhöht die Wahrscheinlichkeit, dass ein Radarsensor auch ein unerwünschtes, interferierendes Signal eines anderen Radarsensors des gleichen Fahrzeugs empfängt.

Mit einer zunehmenden Verbreitung von Radarsensoren in Kraftfahrzeugen kann in bestimmten Verkehrsszenarien auch ein unerwünschter Empfang von Radarsignalen anderer Fahrzeuge auftreten. So könnte beispielsweise bei einer Kolonnenfahrt ein Heck-Radarsensor eines vorausfahrenden Fahrzeugs einen Frontradarsensor des folgenden Fahrzeugs stören.

Aufgabe der Erfindung ist es, ein FMCW-Radarsystem und einen FMCW-Radarsensor mit Chirp-Sequence-Modulation zu schaffen, bei dem unerwünschte Signale anderer Radarsensoren wirksam unterdrückt werden können.

Ein Ansatz zur Unterdrückung von interferierenden Signalen anderer Radarsensoren ist ein Versatz der Mittenfrequenzen der Radarsensoren. Dies ist jedoch aufgrund der zur Verfügung stehenden Bandbreite nur beschränkt möglich und führt zu Einbußen in der Entfernungstrennfähigkeit.

Ein weiterer Ansatz ist die Erkennung von Interferenz im Zeitsignal des Radarsensors basierend auf Interpolation des Zeitsignals. Dabei wird die Modellannahme vorausgesetzt, dass nur ein kleiner Bereich des Zeitsignals gestört ist. Bei Verwendung kurzer Rampendauern oder bei gleichzeitigem Auftreten mehrerer interferierender Signale ist jedoch eine Erkennung der Interferenz und die Interpolation nicht mehr möglich.

Die Aufgabe wird erfindungsgemäß durch ein Radarsystem nach Anspruch 1 und einen Radarsensor nach Anspruch 6 gelöst. Weitere Ausführungsformen der Erfindung sind durch die abhängigen Ansprüche definiert. Ausführungsformen, die hier beschrieben werden, und durch die Ansprüche nicht abgedeckt sind, dienen dazu, das Verständnis der Erfindung zu erleichtern. Beispielsweise erfolgt wie bei einer herkömmlichen Chirp-Sequence-Modulation eine Fourieranalyse in Form einer zweidimensionalen, zweistufigen diskreten Fouriertransformation. Eine erste Fouriertransformation bildet eine kohärente, einem entfernungsabhängigen Signalanteil entsprechende Schwingung innerhalb des Radarechos einer Frequenzrampe durch einen Peak im eindimensionalen Spektrum ab. Eine zweite Fouriertransformation wird über die eindimensionalen, hier allerdings zuvor phasendemodulierten Spektren der ersten Fouriertransformation ausgeführt und bildet eine kohärente, einem Doppleranteil entsprechende Schwingung über die Radarechos der Folge der Frequenzrampen durch die Lage des Peaks im Spektrum der zweiten Fouriertransformation ab. Ergebnis der zweidimensionalen Fouriertransformation ist ein zweidimensionales, diskretes oder gerastertes, d.h. in Entfernungs-/Geschwindigkeits-Zellen eingeteiltes, Spektrum. Die Phasendemodulation geschieht vorzugsweise dadurch, dass die eindimensionalen Spektren der Frequenzrampen mit dem jeweiligen konjugiert-komplexen Element der im Empfänger verwendeten Codefolge multipliziert werden. Die zweite Fouriertransformation beinhaltet bereits die Summation der jeweiligen Terme und liefert daher den Wert der Autokorrelation bzw. Kreuzkorrelation als Faktor der Amplitude in der entsprechenden Entfernungs-/Geschwindigkeits-Zelle des zweidimensionalen Spektrums.

Durch die erfindungsgemäße Phasendemodulation ergibt sich nach der zweiten Fouriertransformation nur dann ein Leistungspeak eines Radarechos, wenn nach der Phasendemodulation eine kohärente Schwingung der Phasenlage der Radarechos über die Folge der Frequenzrampen vorhanden ist. Diese Bedingung erfüllen Radarechos, deren Sendesignal mit der Codefolge phasenmoduliert wurde, die mit der zur Phasendemodulation verwenden Codefolge korreliert. Enthält das Basisbandsignal eines Radarechos hingegen einen Anteil des wenigstens einen zweiten Radarsensors, so haben die entsprechenden, nach der ersten Fouriertransformation erhaltenen Peaks nach der Phasendemodulation keine Kohärenz über die Folge der Frequenzrampen. Die Kreuzkorrelation der Codefolgen liefert hier den Faktor Null.

Besonders vorteilhaft ist, dass durch die Verwendung von zueinander orthogonalen Codefolgen auch bei relativ kurzen Codefolgen eine sehr gute, im Idealfall vollständige Unterdrückung von interferierenden Radarechos von Signalen des anderen Radarsensors erfolgt.

Durch die beschriebene Verwendung orthogonaler Codefolgen kann somit bei zeitlich synchronisierter Phasenmodulation zweier Sendesignale eine gegenseitige Interferenz unterdrückt werden. Somit kann Eigeninterferenz innerhalb eines Radarsystems mit mehreren Radarsensoren eines Fahrzeugs unterdrückt werden.

Die Aufgabe wird weiter gelöst durch ein Radarsystem nach Anspruch 6.

Die getrennte Verarbeitung der Radarechos der Teil-Sendesignale bis zur Bestimmung eines zweidimensionalen Spektrums entspricht beispielsweise jeweils den oben beschriebenen Auswerteschritten.

Durch die Phasendemodulation und Summation der zweidimensionalen Spektren für die Teil-Signale ergibt sich im summierten Spektrum nur dann ein Leistungspeak eines Radarechos, wenn sich die getrennten Spektren zu einem Spektrum addieren, in welchem eine kohärente Schwingung der summierten Phasenlagen der Radarechos über die Folgen der Frequenzrampen vorhanden ist. In der Addition wird im Falle eines Nutzsignals die Summe der Autokorrelationsfunktionen bei Zeitverschiebung Null als Faktor der Amplitude in der entsprechenden Entfernungs-/Geschwindigkeits-Zelle erhalten. Im Falle eines interferierenden, mit einem weiteren Codesatz phasenmodulierten Signals des Radarsensors des anderen Fahrzeugs wird die Summe der Kreuzkorrelationsfunktionen als Faktor der Amplitude erhalten. Diese ist gemäß der Codesatz-Orthogonalitätsbeziehung gleich Null, unabhängig vom Wert einer Zeitverschiebung zwischen den Codefolgen.

Durch die beschriebene Verwendung von Codesätzen mit Codefolgen, die die Codesatz-Orthogonalitätsbeziehung erfüllen, kann auch bei zeitlich nicht synchronisierter Phasenmodulation zweier Sendesignale eine gegenseitige Interferenz unterdrückt werden. Somit kann Fremdinterferenz zwischen Radarsensoren zweier Fahrzeuge unterdrückt werden.

Weitere vorteilhafte Ausgestaltungen und Weiterbildungen der Erfindung sind in den Unteransprüchen angegeben.

KURZE BESCHREIBUNG DER ZEICHNUNGEN

Im Folgenden werden Ausführungsbeispiele anhand der Zeichnung näher erläutert.
Es zeigen:

Fig. 1        ein Blockdiagramm eines FMCW-Radarsensors;

Fig. 2        eine schematische Darstellung einer Folge von Frequenzmodulationsrampen eines Sendesignals;

Fig. 3        ein Blockdiagramm zur Erläuterung der Auswertung eines Basisbandsignals;

Fig. 4        eine schematische Darstellung eines Kraftfahrzeugs mit einem FMCW-Radarsystem in einer Situation mit Eigen-Interferenz;

Fig. 5        ein Diagramm, das Abstandsinformation aus Teilsignalen eines Basisbandsignals zeigt, zur Erläuterung der Auswertung nach Fig. 3;

Fig. 6        ein Diagramm, das Geschwindigkeits- und Abstandsinformation aus einem Signalverlauf über die Teilsignale zeigt, zur Erläuterung der Auswertung nach Fig. 3;

Fig. 7        eine beispielhafte Darstellung eines Sendesignals mit zwei Teil-Sendesignalen in Form einer jeweiligen Folge von Frequenzmodulationsrampen, zur Erläuterung einer Phasendemodulation bei Verwendung von Codesätzen mit mehreren Codes;

Fig. 8        ein Blockdiagramm zur Erläuterung der Auswertung eines Basisbandsignals bei einem Sendesignal mit zwei Rampensätzen wie z.B. nach Fig. 7 ;

Fig. 9        eine schematische Darstellung eines Kraftfahrzeugs mit einem FMCW-Radarsystem in einer Situation mit Fremd-Interferenz;

Fig. 10       ein Diagramm, das Abstandsinformation aus Teilsignalen eines Basisbandsignals in einem Rampensatz zeigt, zur Erläuterung der Auswertung nach Fig. 8;

Fig. 11       ein Diagramm, das Geschwindigkeits- und Abstandsinformation aus Signalverläufen über Folgen von Teilsignalen in einem Rampensatz zeigt, zur Erläuterung der Auswertung nach Fig. 8;

Fig. 12       ein Abstands-Geschwindigkeits-Diagramm nach der Summation von Signalverarbeitungsergebnissen für die beiden Rampensätze, zur Erläuterung der Auswertung nach Fig. 8; und

Fig. 13       ein Abstands-Geschwindigkeits-Diagramm zur Erläuterung der Auswertung von Multispeed-FMCW-Radarsignalen.

DETAILLIERTE BESCHREIBUNG VON AUSFÜHRUNGSBEISPIELEN

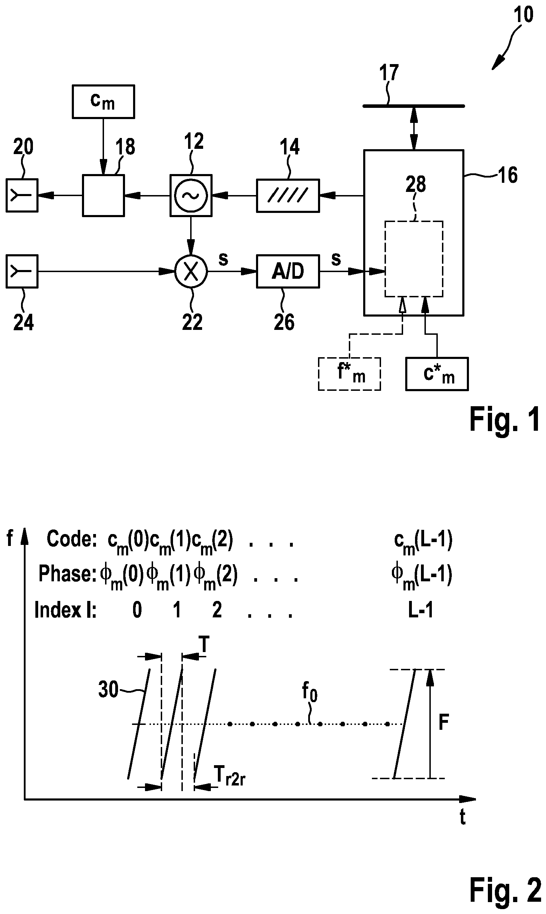

Der in Fig. 1 gezeigte FMCW-Radarsensor 10 ist vorne in einem Kraftfahrzeug eingebaut. Er umfasst einen Oszillator 12 zur Erzeugung eines Sendesignals, eine Frequenzmodulationseinrichtung 14 zur Steuerung der Frequenz des Oszillators 12 und eine Steuer- und Auswerteeinheit 16, die mit einem Fahrzeugbussystem 17 verbindbar ist. Ein Ausgang des Oszillators 12 ist über einen steuerbaren Phasenmodulator 18 mit einem Sendeantennenelement 20 verbunden. Weiter ist ein Ausgang des Oszillators 12 mit einem Mischer 22 verbunden. Dieser ist dazu eingerichtet, ein von einem Empfangsantennenelement 24 empfangenes Empfangssignal mit dem frequenzmodulierten Signal des Oszillators 12 zu mischen, um ein Basisbandsignal s zu erzeugen. Das Basisbandsignal wird durch einen Analog-Digital-Wandler 26 abgetastet und digitalisiert. Das Mischen und Digitalisieren erfolgt unter Erhalt der Phasenbeziehungen zwischen dem empfangenen Signal und dem Sendesignal. Die Steuer- und Auswerteeinheit 16 steuert die Frequenzmodulationseinrichtung 14 und umfasst eine Signalverarbeitungseinheit 28 zur Auswertung der Abtastwerte des Basisbandsignals s.

Fig. 2 zeigt ein Beispiel für ein Modulationsschema des vom Oszillator 12 ausgegebenen und durch den Phasenmodulator 18 phasenmodulierten Sendesignals. Die Frequenz f des Sendesignals ist als Funktion der Zeit t aufgetragen.

Die Frequenzmodulationseinrichtung 14 ist dazu eingerichtet, im einem Messzyklus das Signal des Oszillators 12 entsprechend einer Chirp-Sequence-Modulation mit wenigstens einer Folge von in regelmäßigen Zeitabständen aufeinanderfolgenden Frequenzrampen 30 zu modulieren, insbesondere einer Folge von linearen Rampen gleicher Steigung, gleicher Mittenfrequenz und gleichen Hubs. Die Frequenzmodulationsrampen werden auch als Chirps, Frequenzrampen oder einfach als Rampen bezeichnet.

Der Phasenmodulator 18 ist dazu eingerichtet, die Phasen der Chirps gemäß einer Codefolge $C_m$ zu modulieren, nachfolgend auch als Code $C_m$ bezeichnet. Dabei erhält jeder Chirp mit Index I, I=0,...,L-1, innerhalb der Folge eine Phasenlage gemäß einem zugeordneten Element der Codefolge in Form einer Phase $\phi_m(l)$. Dies kann als Multiplikation der komplexen Amplitude mit dem Faktor $C_m(l) = e^{j\phi_m(l)}$ beschrieben werden, wobei j die imaginäre Einheit ist. Die Anzahl der Rampen der Folge beträgt L und ist gleich der Länge des Codes $C_m$.

Die Chirp-Sequence-Modulation und die Phasenmodulation sind über den Fahrzeugbus 17 mit einer Modulation eines weiteren Radarsensors 10' synchronisierbar, so dass bei den jeweiligen Folgen der Frequenzrampen bzw. jeweiligen Codefolgen die zeitlichen Lagen von einander in der Reihenfolge entsprechenden Rampen bzw. Elementen der Codefolge nur einen geringen oder keinen Zeitversatz haben. Der Zeitversatz ist kleiner als die Dauer einer Rampe. Vorzugsweise werden die einander in der Reihenfolge entsprechenden Rampen bzw. Elemente der Codefolgen größtenteils zeitlich überlappend, besonders bevorzugt nahezu gleichzeitig (d.h. zeitlich vollständig überlappend) verwendet.

Die mittlere Frequenz des Sendesignals liegt in der Größenordnung von 76 Gigahertz, und der Frequenzhub F jeder Rampe liegt in der Größenordnung von einigen Megahertz. Die Rampendauer T ist in Fig. 2 kleiner als der zeitliche Abstand $T_{r2r}$, in dem die Rampen 30 aufeinander folgen. $T_{r2r}$ liegt in der Größenordnung von einigen Mikrosekunden bis hin zu wenigen Millisekunden.

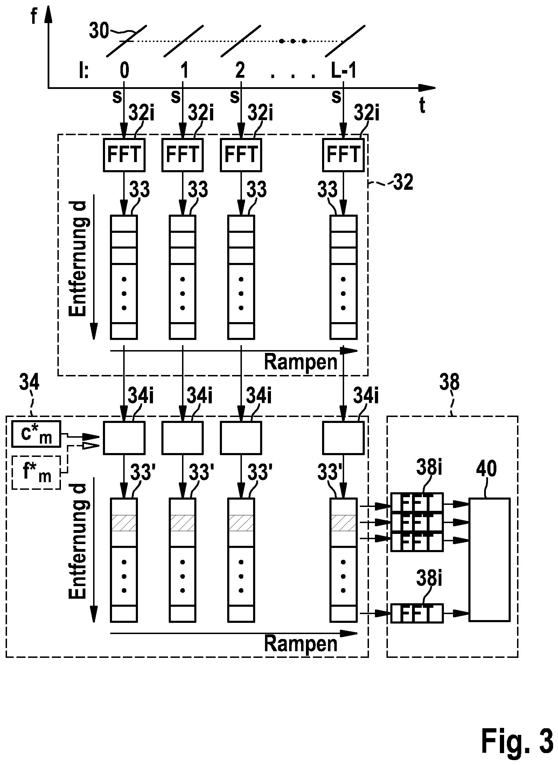

Fig. 3 zeigt ein Blockdiagramm eines in der Signalverarbeitungseinheit 28 implementierten Verfahrens zur Auswertung des Basisbandsignals s.

Eine erste Fouriertransformation 32 erfolgt, indem die den Chirps entsprechenden Teil-signale des Basisbandsignals s jeweils einer diskreten Fouriertransformation 32i in Form einer schnellen Fouriertransformation (FFT) unterzogen werden, um ein jeweiliges komplexes Frequenzspektrum 33 zu bestimmen. Für ein geortetes Objekt enthält das Spektrum 33 einen Peak bei einer jeweiligen Frequenzlage $f_d$.

Über die Folge der Chirps 30 ergibt sich bei konstanter Relativgeschwindigkeit v des georteten Objekts eine harmonische Schwingung der Phase des Peaks. Deren Frequenzlage $f_v$ ist proportional zur mittleren Relativgeschwindigkeit v. Zusätzlich weist das Signal innerhalb einer Rampe 30 den Phasenoffset $\phi_m(l)$ auf.

Nach der ersten FFT 32 werden die eindimensionalen Frequenzspektren 33 einer Phasendemodulation 34 unterzogen, bei der die dem Sendesignal aufmodulierten Phasenoffsets durch entgegengesetzte Phasenoffsets demoduliert werden. Zum Rampenindex I erfolgt eine jeweilige Demodulation 34i durch Multiplikation des komplexen Spektrums 33 mit $C^*_m(l)$, dem konjugiert-komplexen von $C_m(l)$.

Es erfolgt eine zweite Fouriertransformation 38, beispielsweise in Form einer jeweiligen FFT 38i, die für einen jeweilige, einer Entfernung d entsprechende Frequenzlage der eindimensionalen, phasendemodulierten Spektren 33' über den laufenden Rampenindex I ausgeführt wird. Beispielhaft sind in Fig. 3 die zu einer Frequenzlage der Frequenzspektren 33' gehörenden Werte der Frequenzspektren 33' schraffiert dargestellt.

Bei der Frequenzlage $f_d$ der ersten FFT zeigt das mit der zweiten FFT berechnete Frequenzspektrum den dem jeweiligen Objekt zugeordneten Peak bei der Dopplerfrequenz $f_v$, entsprechend einer Peak-Lage $(f_d, f_v)$ im erhaltenen zweidimensionalen Spektrum. Die weitere Auswertung und Objektdetektion erfolgt durch eine Detektionseinheit 40.

Die Phasendemodulation kann alternativ bereits vor der Berechnung der ersten FFT 32 erfolgen. Die Hintereinanderschaltung der ersten FFT 32 und der zweiten FFT 38 entspricht einer zweidimensionalen FFT der phasendemodulierten Folge der Radarechos.

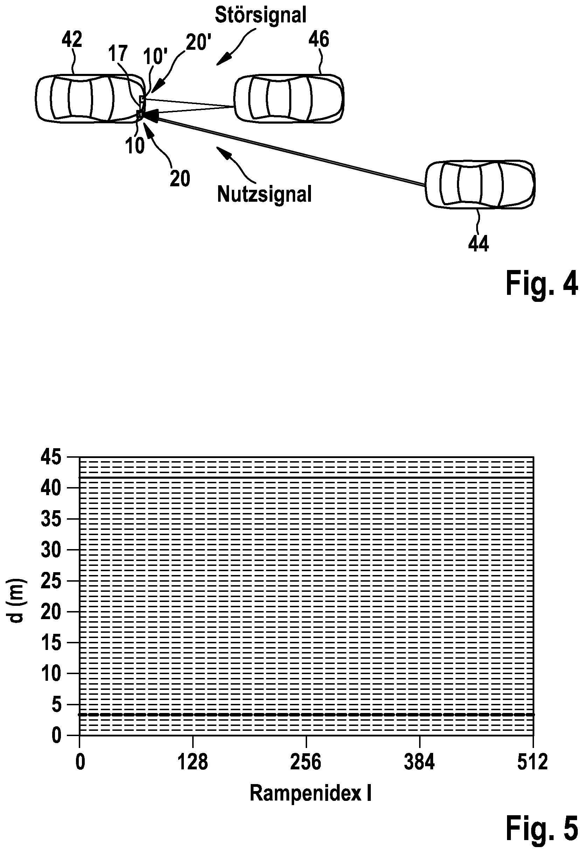

Fig. 4 zeigt ein Beispiel, bei dem durch Verwendung verschiedener Codefolgen zweier FMCW-Radarsensoren 10, 10' in einem Kraftfahrzeug 42 Eigen-Interferenz in Form eines Störsignals, das vom einem Radarsensor 10 empfangen wird und vom anderen Radarsensor 10' mit einer Sendeantenne 20' stammt, unterdrückt wird. Die Radarsensoren 10, 10' haben unterschiedliche Einbauorte und sind insbesondere separat am Fahrzeug montiert.

Im Beispiel befindet sich ein Radarobjekt 44 auf einer Nebenspur bei einer Entfernung d = 42 m und hat eine Relativgeschwindigkeit von v = -7,6 m/s. Ein interferierendes Signal aus einem zweiten Radarsensor 10' des eigenen Fahrzeugs wird von einem Objekt 46 in einer Entfernung von 3,32 m und mit einer Relativgeschwindigkeit von 0 m/s empfangen, beispielsweise einem vorausfahrenden Fahrzeug. Die Sendesignale, und insbesondere die Rampenfolgen der Radarsensoren 10, 10', sind über ein bordeigenes Fahrzeugbussystem des Kraftfahrzeuges 42 miteinander synchronisiert.

Der erste Radarsensor 10 verwendet für die Phasenmodulation eine Codefolge $C_m$, der zweite Radarsensor 10' eine dazu orthogonale Codefolge $C_q$. Die Codefolgen werden nachfolgend auch als Codes bezeichnet.

Codes werden als orthogonal bezeichnet, wenn ihre Kreuzkorrelationsfunktion für ein einen Zeitversatz Null gleich Null ist, d.h. $r_{Cm,Cq}(0) = 0$. Die Kreuzkorrelationsfunktion ist für komplexe $C_m$, $C_q$ definiert als:

$$r_{Cm,Cq}(i) = \sum_{h=-\infty}^{\infty} C^*_m(h) \cdot C_q(h+i) \qquad (1)$$

wobei für Indizes außerhalb des Bereichs 0,...,L-1 die Elemente der Codes als Null definiert werden. Dabei ist i der Zeitversatz und entspricht der Differenz der Indizes der Werte der jeweiligen Codes.

Als orthogonale Codes können beispielsweise Hadamard-Codes verwendet werden. Hadamard-Codes sind binäre Codes, bei denen die Codes eines Codesatzes aus zueinander orthogonalen Zeilen von Hadamard-Matrizen bestehen. Die Elemente eines Codes, auch als Codewerte bezeichnet, sind auf die Werte +1 und -1 beschränkt, entsprechend Phasenoffsets von 0° bzw. 180°. Im Falle eines binären Codes können die Elemente des Codes durch jeweils ein Bit definiert werden.

Für jede Rampe wird das Spektrum nach der ersten FFT mit dem konjugiert komplexen des zugeordneten Elements der Codefolge multipliziert.

Da die Dauer einer Rampe sehr viel größer als die Laufzeit des Signals zu einem realen Ziel und zurück ist, kann das empfangene Signal als synchron zu dem gesendeten Signal angesehen werden, entsprechend einem Zeitversatz Null. Dies wird im Folgenden als Synchronisationsbedingung bezeichnet.

Nach Durchführung der zweiten FFT über die Rampen ergibt sich für den Peak bei der Dopplerfrequenz $f_v$ eine Amplitude, die proportional ist zum Wert der Kreuzkorrelationsfunktion des verwendeten Codes mit Zeitversatz Null, $r_{Cm,Cm}(0) = L$. Die Korrelationssumme der Codes ist gleich der Codelänge L. Dies entspricht der synchronen Multiplikation der beiden Codes. Insgesamt ist die Amplitude durch die Integration der 1. FFT über K Samples pro Rampe und die Integration der 2. FFT über die L Rampen einer Folger um einen Faktor KL größer als die Amplitude des Empfangssignals.

Wird ein interferierendes Signal von dem zweiten Radarsensor 10' empfangen, das mit dem Code $C_q$ kodiert wurde, so ergibt sich nach der ersten Fouriertransformation und der Phasendemodulation mit dem Code $C_m$ hingegen als Vorfaktor einer Amplitude der zweiten Fouriertransformation die Kreuzkorrelationsfunktion der beiden Codes für einen Zeitversatz gleich Null, $r_{Cm,Cq}(0)$. Dabei ist der Zeitversatz gleich 0, wenn die Synchronisationsbedingung erfüllt ist und somit das von der ersten Rampe des Radarsensors 10' stammende Signal zusammen mit dem von der ersten Rampe des Radarsensors 10 stammenden Signal empfangen wird. Aufgrund der Orthogonalität $r_{Cm,Cq}(0)=0$ der beiden Codes wird die Störung unterdrückt. Die Korrelationssumme ist Null.

Im Beispiel ist ein Störsignal ein vom Radarsensor 10' stammendes, am Objekt 44 reflektiertes Signal. Es können aber auch direkt vom Radarsensor 10' stammende Störsignale unterdrückt werden. Diese können beispielsweise einem Scheinobjekt entsprechen.

Die in Fig. 4 gezeigte Situation wird im Folgenden beispielhaft anhand einer Chirp-Sequenz-Modulation beschrieben, mit folgenden Parametern des Rampensatzes: F = 180 MHz, T = $T_{r2r}$ = 0,02 ms, und L = 512, womit sich eine Zeitdauer des Rampensatzes von $T_{slow}$ = 10,24 ms ergibt. Jede Rampe wird an $N_{fast}$ = 512 Stellen abgetastet.

Aufgrund der Kürze und Steilheit der Rampen dominiert im Basisbandsignal einer Rampe der abstandsabhängige Anteil der Frequenz, so dass das Frequenzspektrum der ersten FFT eines Teilsignals einer Auflösung nach den Entfernungen d entspricht. Die Amplituden der Frequenzspektren der Teilsignale sind in Fig. 5 schematisch über dem Abstand d und über dem Rampenindex I aufgetragen. Dabei sind die geschätzte Entfernung des echten Ziels bei d = 42 m und die Entfernung des interferierenden Signals bei einem Abstand 3,32 m markiert.

Die Werte der komplexen Amplitude bei der Frequenzlage entsprechend dem Abstand d = 42 m sind dabei über die Folge der Rampen I mit dem Code $C_m(I)$ phasenmoduliert. Hingegen sind die komplexen Amplituden bei der Frequenzlage des interferierenden Signals mit dem Code $C_q(I)$ phasenmoduliert.

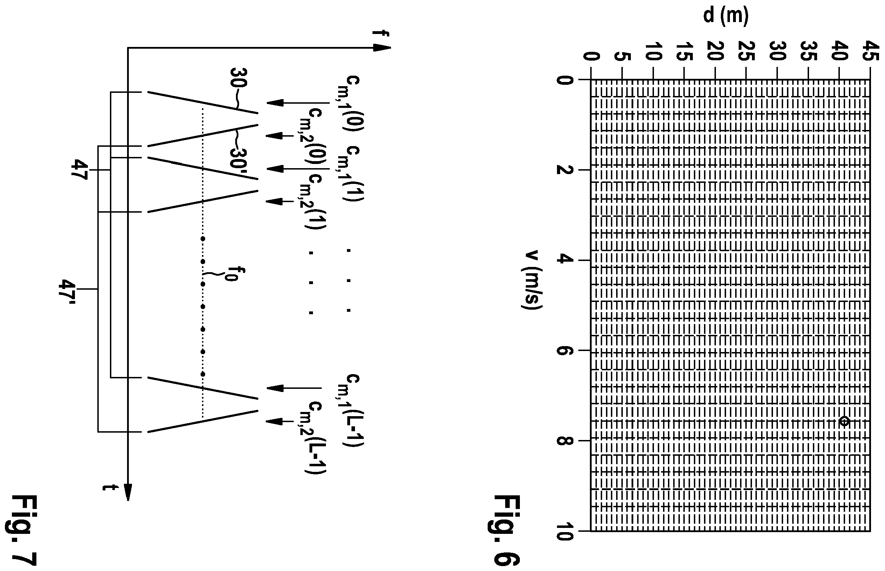

Nach der Phasendemodulation mit dem Code $C_m$ und der zweiten FFT weist das zweidimensionale Spektrum einen einzigen Peak bei der Frequenzlage des realen Objektes entsprechend d = 42 m und v = -6,7 m/s auf, wie in Fig. 6 schematisch dargestellt ist. Der Wert bei der Frequenzlage des Differenzsignals vom Ziel mit Abstand 3,32 m und Relativgeschwindigkeit 0 m/s ist hingegen Null, da bei der Summation der zweiten FFT die Orthogonalität der verwendeten Codes eine Amplitude von Null ergibt.

Wenn bei kurzer Rampenzeit die Synchronisationsbedingung nicht erfüllt ist, so ergibt sich als Vorfaktor des Interferenzsignals nach der zweiten FFT die Kreuzkorrelationsfunktion der Codes mit einem Zeitversatz ungleich Null. Diese ist im Normalfall nicht Null. Sie ist jedoch beispielsweise bei Verwendung von zwei Hadamard-Codes mit der Codelänge L=512 um $\log_{10}(1/512)$ = 27dB kleiner als der Vorfaktor L = 512 der Amplitude des Nutzsignals. Somit wird auch bei einem geringen Zeitversatz, der die Länge einer Rampe übersteigt, das interferierende Signal wirksam unterdrückt.

Anhand von Fig. 7 bis Fig. 12 wird nachfolgend ein Beispiel eines Radarsystems für eine Flotte von Fahrzeugen 42, 46 erläutert, bei dem durch Verwendung von Codesätzen mit jeweils zwei Codefolgen bei einem Radarsensor 10 eines Kraftfahrzeug 42 Fremd-Interferenz in Form eines Störsignals, das vom anderen Radarsensor 10' eines anderen Kraftfahrzeugs 46 stammt, unterdrückt wird.

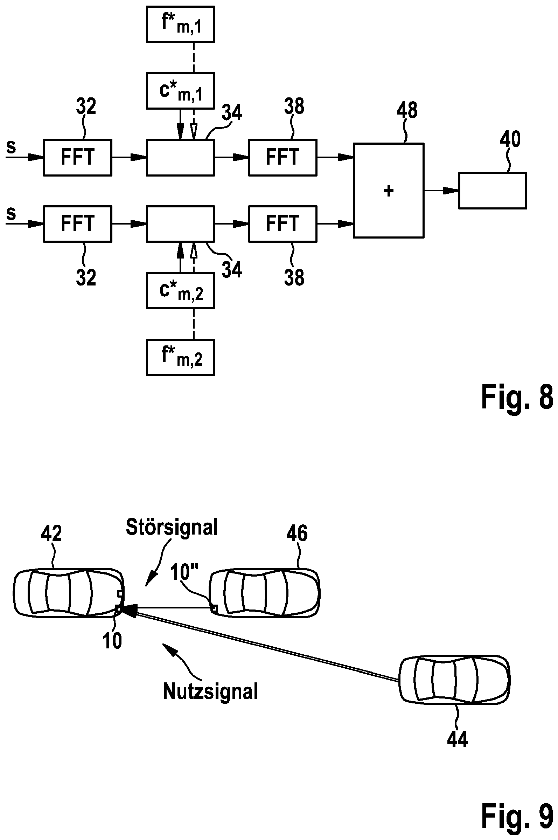

Fig. 9 zeigt schematisch eine Beispiel einer Verkehrssituation, bei dem ein in einem Fahrzeug 42 eingebauter Radarsensor 10 ein reflektiertes Signal von einem realen Ziel 44 bei einer Entfernung von d = 42 m und einer Relativgeschwindigkeit v = -7,6 m/s empfängt. Ein interferierendes Signal eines am Fahrzeugheck eines vorausfahrenden Fahrzeugs 46 montierten Radarsensors 10" wird aus einer Entfernung von 1,66 m bei einer Relativgeschwindigkeit von 0 m/s empfangen.

Fig. 7 zeigt dazu ein Beispiel eines Sendesignals, bei dem ein Messzyklus zwei Teil-Sendesignale 47, 47' in Form von verschachtelten Folgen von Frequenzrampen 30, 30' umfasst. Die beiden Folgen werden nachfolgend auch als Rampensätze 47, 47' bezeichnet. Innerhalb des jeweiligen Rampensatzes oder Teil-Sendesignals 47, 47' haben die Frequenzrampen 30 bzw. 30' einen identischen Rampenhub, Rampensteigung und Mittenfrequenz der Rampen. Die Rampensätze können sich beispielsweise durch einen unterschiedlichen Rampenhub, eine unterschiedliche Mittenfrequenz und/oder eine unterschiedliche Rampensteigung voneinander unterscheiden. Im gezeigten Beispiel unterscheiden sich die Rampensätze lediglich durch das unterschiedliche Vorzeichen der Rampensteigung. Die Parameter der Frequenzrampen entsprechen dem obigen Beispiel. Aufgrund der verschachtelten Rampensätze 47 und 47' ist nun aber $T_{r2r}$ = 0,04 ms.

Jeder Rampensatz wird mit einer zugeordneten Codefolge eines Codesatzes phasenmoduliert, wobei die Codefolge jeder Frequenzrampe der Folge einen Phasenoffset zuordnet. Der Rampensatz 47 (Rampen 30) wird mit einer Codefolge $C_{m1}$ moduliert, und der Rampensatz 47' (Rampen 30') wird mit einer Codefolge $C_{m2}$ moduliert.

Der Codesatz $C_m$ mit den Codes $C_{m1}$ und $C_{m2}$ wird aus einer Codegruppe gewählt, die M Codesätze enthält, wobei jeder Codesatz Q Codes der Länge L hat, wobei Q der Anzahl der Rampensätze entspricht und größer oder gleich 2 ist, im Beispiel Q=2. Es wird eine Codegruppe gewählt, die die als Codesatz-Orthogonalitätsbedingung bezeichnete Eigenschaft für alle Paare von Codesätzen Cm und Cq erfüllt:

$$r_{Cm1,Cq1}(i) + r_{Cm2,Cq2}(i) + \ldots + r_{CmQ,CqQ}(i) = 0 \text{ für alle } i=0,\ldots,L-1. \qquad (2)$$

Gruppen von Codesätzen mit dieser Eigenschaft werden auch als gegenseitig orthogonal ("mutually orthogonal") bezeichnet.

Zur Veranschaulichung wird ein Beispiel mit L = 16 und einer Anzahl von M = 2 Codesätzen C1,C2 mit jeweils Q = 2 Codes C11,C12 bzw. C21,C22 gegeben:

$$C11 = (+1,+1,+1,-1,+1,+1,-1,+1,+1,+1,+1,-1,-1,-1,+1,-1)$$
$$C12 = (+1,+1,+1,-1,+1,+1,-1,+1,-1,-1,-1,+1,+1,+1,-1,+1)$$
$$C21 = (+1,-1,+1,+1,+1,-1,-1,-1,+1,-1,+1,+1,-1,+1,+1,+1)$$
$$C22 = (+1,-1,+1,+1,+1,-1,-1,-1,-1,+1,-1,-1,+1,-1,-1,-1) \qquad (3)$$

Die Codesätze erfüllen die Eigenschaft der gegenseitigen Orthogonalität:

$$r_{C11, C21}(i) + r_{C12, C22}(i) = 0 \text{ für alle } i. \qquad (4)$$

Im Folgenden wird ein Beispiel mit L=512 beschrieben. Das Signal des Radarsensors 10 ist mit dem Codesatz Cm kodiert. Das Signal des fremden Radarsensors 10" ist mit einem Codesatz Cq kodiert.

Die zu den beiden Rampensätzen 47, 47' empfangenen Signale werden zunächst getrennt in einem jeweiligen Kanal verarbeitet, wie in Fig. 8 schematisch dargestellt ist. Die Trennung kann beispielsweise durch einen Zeitversatz, unterschiedliche Rampenparameter, und/oder durch eine Polarisation der für die einzelnen Rampensätze verwendeten Antennen realisiert werden. Im Beispiel wird ein Zeitversatz und eine unterschiedliche Steigung in Form eines unterschiedlichen Vorzeichens der Rampensteigung verwendet.

Im jeweiligen Kanal entspricht die Verarbeitung zunächst der anhand von Fig. 3 erläuterten Verarbeitung. Es wird die erste Fouriertransformation 32 durchgeführt. Zur Phasendemodulation wird ein Codesatz verwendet, der mit dem zur Phasenmodulation verwendeten Codesatz $C_{m1}$, $C_{m2}$ korreliert, hier beispielsweise identisch ist. Die Phasendemodulation 34 wird durch Multiplikation mit dem konjugiert-komplexen $C^*_{m,1}$ bzw. $C^*_{m,2}$ des jeweiligen Codes durchgeführt, und die zweite Fouriertransformation 38 wird über die Rampen des betreffenden Rampensatzes durchgeführt.

In einer Summation 48 werden die erhaltenen zweidimensionalen Spektren des ersten Rampensatzes 47 und des zweiten Rampensatzes 47' addiert und zur weiteren Auswertung an die Detektionseinheit 40 übergeben. Da die Entfernung eines Ziels sich während des Zeitversatzes der Rampensätze 47, 47' nur um einen sehr geringen Wert ändert, werden bei der Summation der zweidimensionalen Frequenzspektren die komplexen Amplituden kohärent addiert.

Für den Fall eines realen Ziels entsteht bei der Frequenzlage des Ziels in den Frequenzspektren des Basisbandsignals bei der zweiten FFT 38 für einen jeweiligen Rampensatz eine Amplitude, die proportional zur Autokorrelationsfunktion des jeweiligen Codes mit Zeitversatz Null ist. Die Korrelationssumme der Codes ist für den jeweiligen Rampensatz daher gleich der Codelänge L.

Nach Summation der zweidimensionalen Spektren der Rampensätze 47, 47' ergibt sich ein Peak mit der Amplitude des Betrags $2AN_{fast}L$. Die Amplitude ist somit proportional einer Summe der Korrelationssummen der Codes des Codesatzes.

Bei einer Frequenz des interferierenden Signals eines fremden Radarsensors, der mit dem Codesatz $C_{q1}$, $C_{q2}$ kodiert ist, ergibt sich bei der Summe der zweidimensionalen Spektren jedoch jeweils eine Amplitude, die proportional ist zur Summe der Kreuzkorrelationsfunktionen der jeweiligen Codes der Codesätze mit einem Zeitversatz, der gleich Null oder ungleich Null sein kann. Aufgrund der Eigenschaft der gegenseitigen Orthogonalität gemäß Gleichung (2) ist diese stets Null.

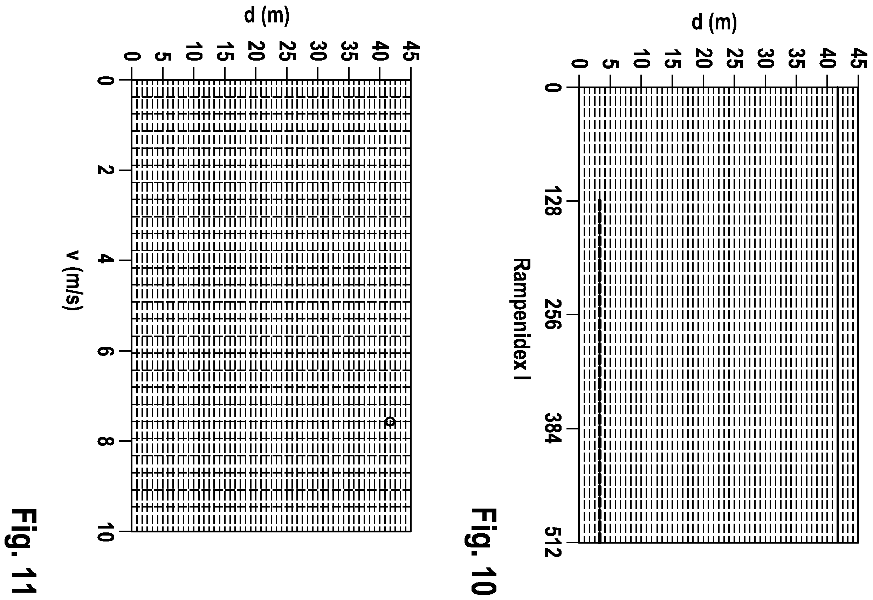

Fig. 10 zeigt schematisch über dem Rampenindex I eines einzelnen Rampensatzes 47 bzw. 47' die aus der ersten FFT gewonnene Information über den Abstand d. Das Signal des fremden Radarsensors wird 5,12 ms später als das Radarecho des Ziels vom Radarsensor 10 empfangen.

Für die Frequenzspektren der jeweiligen Rampensätze 47, 47' werden dann die jeweiligen Phasendemodulationen und die zweite Fouriertransformation 38 durchgeführt. Es ergibt sich für die beiden Rampensätze jeweils ein zweidimensionales Spektrum über d und v gemäß Fig. 11.

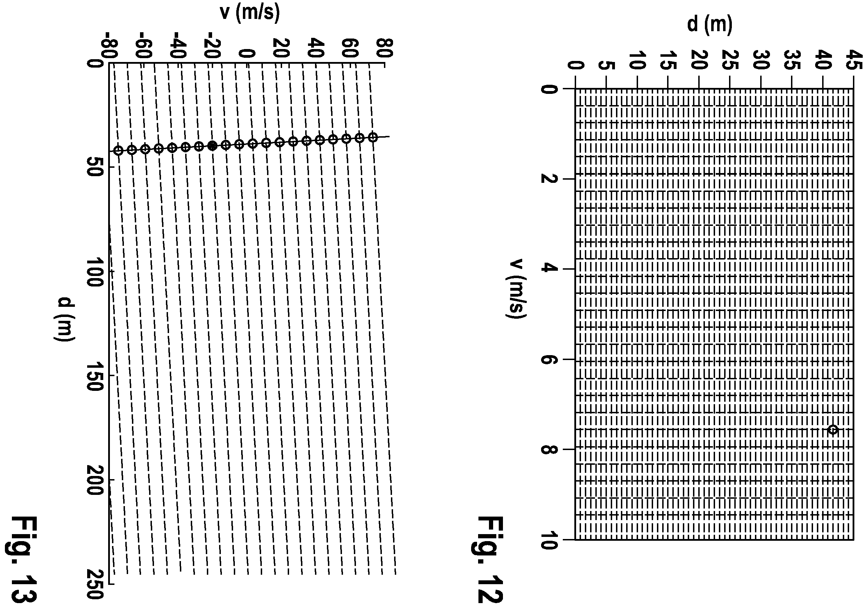

Nach Summation der Spektren ergibt sich ein Spektrum gemäß Fig. 12. Die Amplituden des scheinbaren Ziels summieren sich zu Null. Für das reale Ziel ergibt sich hingegen aufgrund der Summation der Autokorrelationsfunktionen eine Amplitude

$$2A_1 N_{fast} L e^{j\phi_{01}}. \qquad\qquad (5)$$

Dabei ist $\phi_{01}$ ein Phasenoffset, der von der Entfernung des Ziels abhängig ist.

Somit wird das interferierende Signal wirksam unterdrückt, und das reale Ziel kann anhand des zweidimensionalen Spektrums detektiert werden.

In einer Variante des beschriebenen Verfahrens mit gegenseitig orthogonalen Codes werden für aufeinanderfolgende Messzyklen unterschiedliche Codesätze verwendet. Beispielsweise kann ein Codesatz zufällig aus einer Gruppe gegenseitig orthogonaler Codes gewählt werden. Somit wird bei einer Interferenz von Signalen von Radarsensoren zweier Fahrzeuge, die dieselbe Codegruppe verwenden, die Wahrscheinlichkeit verringert, dass die Fahrzeuge gleichzeitig dieselbe Codierung verwenden.

Zur weiteren Verringerung der Auswirkung von Fremd-Interferenz können in aufeinanderfolgenden Messzyklen unterschiedliche Werte wenigstens eines Parameters der Frequenzrampen der Rampensätze 47, 47' verwendet werden. Werden beispielsweise unterschiedliche Rampensteigungen verwendet, so wird die Wahrscheinlichkeit erhöht, dass ein interferierendes Signal eine andere Rampensteigung als das Signal des eigenen Radarsensors hat. Die Energie des interferierendes Signals verteilt sich dann im Basisbandsignal über Frequenzen und bewirkt einen Rauschhintergrund des Nutzsignals. Es können beispielsweise auch unterschiedliche Dauern oder Anzahlen der Rampen der Rampensätze und/oder unterschiedliche Mittenfrequenzen verwendet werden.

Während bei den oben beschriebenen Beispielen die Phasenmodulation und - demodulation jeweils mit demselben Code erfolgt, entsprechend einem "Matched Filter"-Ansatz, ist es auch denkbar, stattdessen für die Phasendemodulation einen Code $f_m$ bzw. einen Codesatz $f_{m1}$, $f_{m2}$ zu verwenden, der mit dem Code $C_m$ korreliert, aber nicht identisch ist, wobei der Codesatz $f_{m1}$, $f_{m2}$ mit dem wenigstens einen weiteren Codesatz $C_q$ die Codesatz-Orthogonalitätsbedingung erfüllt. Dies ist in Fig. 1, Fig. 3 und Fig. 8 jeweils gestrichelt angedeutet. Entsprechend einem "Mismatched-Filter"-Ansatz werden die einem linearen Filter entsprechenden Codes $f_{m1}$, ....., $f_{mQ}$ für eine Anzahl von Q Codes der Länge L eines Codesatzes beispielsweise so gewählt, dass sie die Bedingungen erfüllen:

$$r_{fm1,\,Cm1}(0) + r_{fm2,\,Cm2}(0) + \ldots + r_{fmQ,\,CmQ}(0) = LQ, \text{ und} \qquad (6)$$

$$r_{fm1,\,Cq1}(i) + r_{fm2,\,Cq2}(i) + \ldots + r_{fmQ,\,CqQ}(i) = 0 \text{ für alle } i \qquad (7)$$

Dadurch steht eine größere Anzahl von Codesätzen zur Verfügung.

Anders als beschrieben kann die Phasendemodulation des Basisbandsignals auch vor der ersten FFT durchgeführt werden, wobei z.B. die Phasendemodulation mit den Codefolgen eines Codesatzes in getrennten Kanälen erfolgt.

Auch kann eine Phasendemodulation mit dem beim Sendesignal verwendeten Code erfolgen, indem der Mischer ein empfangenes Signal mit dem phasenmodulierten Sendesignal mischt, um das Basisbandsignal zu erzeugen.

Es können auch mehrwertige Codes verwendet werden. Binäre Codes ermöglichen jedoch einen schaltungstechnisch einfachen Aufbau, da für einen Phasenoffset von 180° lediglich die Amplitude des Signals zu invertieren ist.

In den beschriebenen Beispielen erfolgt lediglich eine Phasenmodulation, jedoch keine Amplitudenmodulation, so dass die volle Signalstärke genutzt werden kann. Ein Sendesignal kann jedoch auch mit wenigstens einer gemäß einer Codefolge phasen- und amplitudenmodulierten Folge von Frequenzrampen moduliert werden.

Anstelle der beschriebenen Hadamard-Codes können auch andere orthogonale Codes verwendet werden, beispielsweise Fourier-Codes.

Das beschriebene Modulationsverfahren mit Frequenzrampen gleicher Mittenfrequenz $f_0$ gemäß Fig. 2 oder Fig. 7 kann modifiziert werden, indem beispielsweise innerhalb eines Rampensatzes oder einer Rampenfolge die Mittenfrequenz $f_0$ der jeweiligen Rampen gemäß einer linearen, übergeordneten Frequenzrampe mit Hub $F_{slow}$ und Rampendauer $T_{slow}$ verändert wird. Bei der Auswertung der zweiten FFT wird dann die durch die Folge der Rampen abgetastete Schwingung zur Bestimmung des Abstandes und der Relativgeschwindigkeit ausgewertet, wobei die Schwingung zusätzlich zu $f_v$ einen von der Steigung der langsamen Rampe abhängigen Frequenzanteil $f_{d,slow} = 2dF_{slow}/(cT_{slow})$ enthält. Die Frequenz $f_v + f_{d,slow}$ entspricht dann einer FMCW-Gleichung für die übergeordnete Rampe.

Die beschriebenen Codes haben den Vorteil, dass sie für beliebige Codelängen existieren und die günstige Korrelationseigenschaft für jede Codelänge vorhanden ist. Somit wird eine große Flexibilität beim Entwurf von Radarsignalen und Radarsystemen zur Verfügung gestellt. Es können beispielsweise Sendesignale mit wenigen Rampen verwendet werden. Daraus können sich eine geringere Sendezeit und verringerte Anforderungen an Speicher und die Datenübertragungsrate der Auswerteeinheit ergeben.

Bei den beschriebenen Modulationsverfahren werden kurze, schnelle Frequenzrampen verwendet, so dass die Frequenzspektren der den Rampen entsprechenden Teilsignale von dem abstandsabhängigen Frequenzanteil dominiert werden. Es sind aber auch modifizierte Verfahren denkbar, um eine Bestimmung von Werten für v und d eines Objektes zu ermöglichen. Dabei können beispielsweise Rampen mit geringerer Steigung und/oder größerer Rampendauer von z.B. T = 0,1 ms verwendet werden, wodurch auch die Anforderungen an die Abtastrate und/oder die Frequenzmodulation verringert werden. So kann beispielsweise aus einer ersten Fourieranalyse eines einer Rampe zugeordneten Teilsignals ein funktionaler Zusammenhang zwischen v und d ermittelt werden, beispielsweise gemäß der FMCW-Gleichung. Zur Bestimmung von v und d kann dann beispielsweise aus der zweiten FFT erhaltene Information verwendet werden und/oder ein Matching von Werten über mehrere Folgen von Rampen unterschiedlicher Rampenparameter erfolgen.

Beispielsweise kann eine jeweilige erste Fouriertransformation der jeweiligen Radarechos der Frequenzrampen des Sendesignals erfolgen; aus wenigstens einem erhaltenen eindimensionalen Spektrum erste Information in Form eines funktionalen Zusammenhangs zwischen dem Abstand d und der Relativgeschwindigkeit v eines georteten Objekts bestimmt werden, der unterschiedlichen Relativgeschwindigkeiten v unterschiedliche Abstände d zuordnet, wobei beispielsweise der funktionale Zusammenhang einer FMCW-Gleichung für eine jeweilige Frequenzrampe entsprechen kann; wenigstens eine zweite Fouriertransformation in einer zweiten Dimension über den zeitlichen Verlauf der Folge der phasendemodulierten, eindimensionalen Spektren der Radarechos der aufeinanderfolgenden Frequenzrampen ausgeführt werden; aus wenigstens einem erhaltenen Spektrum der zweiten Fouriertransformation, bzw., im Falle der Teil-Sendesignale, aus der Summation der erhaltenen Spektren der zweiten Fouriertransformation, weitere Information über Relativgeschwindigkeit und optional Abstand des georteten Objekts erhalten werden, wobei die weitere Information beispielsweise Information in Form eines funktionalen Zusammenhangs gemäß einer FMCW-Gleichung für die übergeordnete, langsame Rampe der Mittenfrequenzen der Frequenzrampen sein kann; und der Abstand d und die Relativgeschwindigkeit v des georteten Objekts basierend auf einem Abgleichen (auch als Matching bezeichnet) der ersten Information mit der weiteren Information bestimmt werden. Beispielsweise kann das Abgleichen der ersten Information mit der zweiten Information unter Berücksichtigung einer durch einen Eindeutigkeitsbereich für die Relativgeschwindigkeit v und optional den Abstand d bestimmten Mehrdeutigkeit der zweiten Information erfolgen. Ein solches Verfahren wird auch als Multispeed-FMCW (MS-FMCW) bezeichnet. Dabei hat die Verwendung der orthogonalen Codes oder Codesätze, die Orthogonalitätsbedingung erfüllen, den besonderen Vorteil, dass auch bei MS-FMCW-Modulationsmustern mit relativ wenigen, vergleichsweise langen Rampen eine sehr gute Unterdrückung von Eigeninterferenz und/oder Fremdinterferenz erreichen lässt. Es lässt sich somit bei einer verringerten Abtastrate des A/D-Wandlers dennoch eine gute Trennfähigkeit der Relativgeschwindigkeit v erreichen.

Durch die Hintereinanderausführung der eindimensionalen ersten und zweiten Fouriertransformationen stellt das Spektrum der zweiten Fouriertransformation ein Spektrum einer zweidimensionalen Fourieranalyse dar, bzw. eine Summe zweier solcher Spektren der Teil-Sendesignale. Der Abstand und die Relativgeschwindigkeit werden somit insbesondere anhand eines Wertes des Frequenzspektrums einer zweidimensionalen Fourieranalyse bestimmt, bzw. anhand einer Summation solcher zweidimensionaler Frequenzspektren.

Die erste Information kann bereits aus einem eindimensionalen Spektrum einer ersten Fouriertransformation bestimmt werden. Es kann auch anhand eines Peaks im zweidimensionalen Frequenzspektrum die erste Information aus der Lage des Peaks in der ersten Dimension des Frequenzspektrums bestimmt werden und die weitere Information aus der Lage des Peaks in der zweiten Dimension des Frequenzspektrums bestimmt werden.

Fig. 13 zeigt ein Beispiel eines v-d-Diagramms erster und zweiter Information einer Rampenfolge einer MS-FMCW-Messung mit einer langsamen, übergeordneten Frequenzrampe der Mittenfrequenzen der kurzen Rampen. Aus der Auswertung eines Frequenzspektrums eine Frequenzrampe ergibt sich anstelle eines Wertes für d die gegenüber der Vertikalen leicht geneigte Gerade, entsprechend einer linearen Beziehung zwischen der Relativgeschwindigkeit v und dem Abstand d (erste Information). Nach der Phasendemodulation ergibt sich aus dem Peak des Spektrums der zweiten FFT (bzw. aus dem Peak der Summe der Spektren der zweiten FFT) eine weitere, hier flache, gestrichelte Gerade, die mit einer Mehrdeutigkeit behaftet ist. Durch Abgleichen der ersten Information mit der zweiten Information unter Berücksichtigung der genannten Mehrdeutigkeit ergeben sich potentielle Wertepaare (v, d), die durch Kreise an den Schnittpunkten der Geraden gekennzeichnet sind. Nur eines dieser Wertepaare entspricht dem georteten Radarobjekt (in Fig. 13 markiert). Indem im selben Messzyklus wenigstens eine zweite Rampenfolge mit einer anderen Steigung der kurzen Rampen und/oder einer anderen Steigung der übergeordneten Rampe verwendet wird, kann zu dem Radarobjekt ein eindeutiges Wertepaar (v, d) durch Matching der erhaltenen Schnittpunkte bestimmt werden.

**Patentansprüche**

1. Radarsystem für eine Fahrzeugflotte, umfassend mehrere FMCW-Radarsensoren (10, 10") für ein jeweiliges Fahrzeug (42; 46) der Fahrzeugflotte, wobei die FMCW-Radarsensoren (10, 10") jeweils eine Steuer- und Auswerteeinrichtung (16) aufweisen, die für eine Betriebsweise ausgelegt ist, bei der in einem Messzyklus eines jeweiligen Radarsensors (10, 10") mindestens zwei Teil-Sendesignale (47, 47') von dem Radarsensor (10, 10") gesendet werden, **dadurch gekennzeichnet dass**, die Teil-Sendesignale jeweils eine Folge von Frequenzmodulationsrampen (30; 30') umfassen,
wobei das jeweilige Teil-Sendesignal (47, 47') gemäß einer Codefolge ($C_{m1}$, $C_{m2}$) eines Codesatzes phasenmoduliert wird, indem die Frequenzmodulationsrampen (30; 30') jeweils eine Phasenlage gemäß einem der Frequenzmodulationsrampe zugeordneten Element der Codefolge ($C_{m1}$, $C_{m2}$) erhalten,
wobei für die wenigstens zwei Teil-Sendesignale (47, 47') wenigstens zwei zugeordnete Codefolgen ($C_{m1}$, $C_{m2}$) des Codesatzes zur Phasenmodulation verwendet werden,
wobei Radarechos der Teil-Sendesignale (47, 47') getrennt phasendemoduliert werden (34) und für ein jeweiliges Teil-Sendesignal ein Frequenzspektrum einer Fourieranalyse (32, 38) in einer ersten Dimension jeweils über Abtastwerte eines Radarechos einer Frequenzmodulationsrampe (30; 30') und in einer zweiten Dimension über die phasendemodulierte Folge der Radarechos der aufeinanderfolgenden Frequenzmodulationsrampen (30; 30') des Teil-Sendesignals (47, 47') bestimmt wird,
wobei ein Abstand (d) und/oder eine Relativgeschwindigkeit (v) eines georteten Objektes (44) bestimmt wird anhand einer Summation (48) der für die Teil-Sendesignale getrennt bestimmten Frequenzspektren, und
wobei die Steuer- und Auswerteeinrichtung (16) eines Radarsensors (10) für ein erstes Fahrzeug (42) dazu ausgelegt ist, bei der besagten Betriebsweise wenigstens einen ersten Codesatz ($C_{m1}$, $C_{m2}$) zu verwenden,
wobei die Steuer- und Auswerteeinrichtung (16) eines Radarsensors (10") für wenigstens ein anderes Fahrzeug (46) der Fahrzeugflotte dazu ausgelegt ist, bei der besagten Betriebsweise wenigstens einen weiteren Codesatz ($C_{q1}$, $C_{q2}$) zu verwenden, und
wobei der wenigstens eine erste Codesatz ($C_{m1}$, $C_{m2}$) und der wenigstens eine weitere Codesatz ($C_{q1}$, $C_{q2}$) die Codesatz-Orthogonalitätsbedingung erfüllen, dass eine über die Anzahl der Codefolgen je Codesatz ausgeführte Summation der komplexen Kreuzkorrelation der q-ten Codefolge des ersten Codesatzes und der q-ten Codefolge des weiteren Codesatzes gleich Null ist für jede beliebige diskrete Verschiebung zwischen den Codefolgen des ersten und des anderen Codesatzes, einschließlich einer Null-Verschiebung, wobei q der Summationsindex ist.

**2.** Radarsystem nach Anspruch 1, wobei im Falle eines etwaigen, in den Radarechos des Radarsensors (10) für das erste Fahrzeug (42) enthaltenen, von dem mit wenigstens einem weiteren Codesatz ($C_{q1}$, $C_{q2}$) phasenmodulierten Sendesignal eines Radarsensors (10") für ein anderes Fahrzeug (46) stammenden Anteils, der einem potentiellen Radarobjekt entspricht, bei der Summation Radarechos des potentiellen Radarobjekts unterdrückt werden aufgrund der Codesatz-Orthogonalitätsbedingung.

**3.** Radarsystem nach einem der Ansprüche 1 oder 2,
wobei bei der besagten Betriebsweise eines jeweiligen Radarsensors (10; 10") getrennt für die Teil-Sendesignale (47, 47'):

- eine jeweilige erste Fouriertransformation (32i) der jeweiligen Radarechos der Frequenzmodulationsrampen (30; 30') des Teil-Sendesignals (47, 47') erfolgt,
- die Phasendemodulation (34) an den erhaltenen eindimensionalen Spektren (33) der Radarechos der Frequenzmodulationsrampen (30; 30') durchgeführt wird,
- eine zweite Fouriertransformation (38) in einer zweiten Dimension über den zeitlichen Verlauf der Folge der phasendemodulierten, eindimensionalen Spektren (33) der Radarechos der aufeinanderfolgenden Frequenzmodulationsrampen (30; 30') ausgeführt wird, und

wobei eine die Phasen berücksichtigende Summation (48) der getrennt erhaltenen zweidimensionalen Spektren erfolgt, und
wobei ein Abstand (d) und/oder eine Relativgeschwindigkeit (v) eines georteten Objektes (44) bestimmt wird anhand eines Peaks im erhaltenen, summierten zweidimensionalen Spektrum.

**4.** Radarsystem nach einem der Ansprüche 1 bis 3, wobei die Beträge der Werte der für die Teil-Sendesignale getrennt bestimmten Frequenzspektren jeweils proportional sind zum Betrag der komplexen Kreuzkorrelationsfunktion der zur Phasenmodulation des jeweiligen Teil-Sendesignals verwendeten Codefolge ($C_{m1}$, $C_{m2}$) und der mit dieser korrelierenden, für die Phasendemodulation verwendeten Codefolge ($C_{m1}$, $C_{m2}$) bei einer Verschiebung zwischen den Codefolgen von Null.

**5.** Radarsystem nach einem der Ansprüche 1 bis 4, wobei die Steuer- und Auswerteeinrichtung (16) des jeweiligen Radarsensors (10) dazu ausgelegt ist, bei der besagten Betriebsweise in wenigstens einem ersten Messzyklus wenigstens einen ersten Codesatz ($C_{m1}$, $C_{m2}$) zu verwenden und in wenigstens einem weiteren Messzyklus wenigstens einen weiteren Codesatz ($C_{q1}$, $C_{q2}$) zu verwenden,
wobei der erste Codesatz ($C_{m1}$, $C_{m2}$) und der wenigstens eine weitere Codesatz ($C_{q1}$, $C_{q2}$) die Codesatz-Orthogonalitätsbedingung erfüllen.

**6.** FMCW-Radarsensor (10) für ein Fahrzeug (42; 46) einer Fahrzeugflotte, für ein Radarsystem nach einem der Ansprüche 1 bis 5, wobei der FMCW-Radarsensor (10) eine Steuer- und Auswerteeinrichtung (16) aufweist, die ausgelegt ist für eine Betriebsweise, bei der in einem Messzyklus des Radarsensors (10, 10") mindestens zwei Teil-Sendesignale (47, 47') von dem Radarsensor (10, 10") gesendet werden, **dadurch gekennzeichnet dass**, die Teil-Sendesignale jeweils eine Folge von Frequenzmodulationsrampen (30; 30') umfassen,
wobei das jeweilige Teil-Sendesignal (47, 47') gemäß einer Codefolge ($C_{m1}$, $C_{m2}$) eines Codesatzes phasenmoduliert wird, indem die Frequenzmodulationsrampen (30; 30') jeweils eine Phasenlage gemäß einem der Frequenzmodulationsrampe zugeordneten Element der Codefolge ($C_{m1}$, $C_{m2}$) erhalten,
wobei für die wenigstens zwei Teil-Sendesignale (47, 47') wenigstens zwei zugeordnete Codefolgen ($C_{m1}$, $C_{m2}$) des Codesatzes zur Phasenmodulation verwendet werden,
wobei Radarechos der Teil-Sendesignale (47, 47') getrennt phasendemoduliert werden (34) und für ein jeweiliges Teil-Sendesignal ein Frequenzspektrum einer Fourieranalyse (32, 38) in einer ersten Dimension jeweils über Abtastwerte eines Radarechos einer Frequenzmodulationsrampe (30; 30') und in einer zweiten Dimension über die phasendemodulierte Folge der Radarechos der aufeinanderfolgenden Frequenzmodulationsrampen (30; 30') des Teil-Sendesignals (47, 47') bestimmt wird,
wobei ein Abstand (d) und/oder eine Relativgeschwindigkeit (v) eines georteten Objektes (44) bestimmt wird anhand einer Summation (48) der für die Teil-Sendesignale getrennt bestimmten Frequenzspektren,
wobei die Steuer- und Auswerteeinrichtung (16) des Radarsensors (10) dazu ausgelegt ist, bei der besagten Betriebsweise wenigstens einen ersten Codesatz ($C_{m1}$, $C_{m2}$) zu verwenden, der mit wenigstens einem weiteren Codesatz ($C_{q1}$, $C_{q2}$), der von einer Steuer- und Auswerteeinrichtung wenigstens eines anderen Fahrzeugs (46) der Fahrzeugflotte verwendet wird, die Codesatz-Orthogonalitätsbedingung erfüllt, dass eine über die Anzahl der Codefolgen je Codesatz ausgeführte Summation der komplexen Kreuzkorrelation der q-ten Codefolge des ersten Codesatzes und der q-ten Codefolge des weiteren Codesatzes gleich Null ist für jede beliebige diskrete Verschiebung zwischen den Codefolgen des ersten und des anderen Codesatzes, einschließlich einer Null-Verschiebung, wobei q der Summationsindex ist.

**Claims**

1. Radar system for a vehicle fleet, comprising multiple FMCW radar sensors (10, 10") for a respective vehicle (42; 46) of the vehicle fleet, wherein the FMCW radar sensors (10, 10") each have a control and evaluation device (16) designed for a mode of operation in which a measurement cycle of a respective radar sensor (10, 10") involves at least two partial transmission signals (47, 47') being transmitted by the radar sensor (10, 10"), **characterized in that** the partial transmission signals each comprise a sequence of frequency modulation ramps (30; 30'), wherein the respective partial transmission signal (47, 47') is phase-modulated in accordance with a code sequence ($C_{m1}$, $C_{m2}$) of a codeset by virtue of the frequency modulation ramps (30; 30') each obtaining a phase in accordance with an element of the code sequence ($C_{m1}$, $C_{m2}$) that is associated with the frequency modulation ramp, wherein at least two associated code sequences ($C_{m1}$, $C_{m2}$) of the codeset for the at least two partial transmission signals (47, 47') are used for phase modulation, wherein radar echoes of the partial transmission signals (47, 47') are separately phase-demodulated (34) and, for a respective partial transmission signal, a frequency spectrum of a Fourier analysis (32, 38) is determined in a first dimension by means of respective samples of a radar echo of a frequency modulation ramp (30; 30') and in a second dimension by means of the phase-demodulated sequence of the radar echoes of the successive frequency modulation ramps (30; 30') of the partial transmission signal (47, 47'), wherein a distance (d) and/or a relative velocity (v) of a located object (44) is determined on the basis of a summation (48) of the frequency spectra separately determined for the partial transmission signals, and wherein the control and evaluation device (16) of a radar sensor (10) for a first vehicle (42) is designed to use at least one first codeset ($C_{m1}$, $C_{m2}$) for said mode of operation, wherein the control and evaluation device (16) of a radar sensor (10") for at least one other vehicle (46) of the vehicle fleet is designed to use at least one further codeset ($C_{q1}$, $C_{q2}$) for said mode of operation, and wherein the at least one first codeset ($C_{m1}$, $C_{m2}$) and the at least one further codeset ($C_{q1}$, $C_{q2}$) satisfy the codeset orthogonality condition that a summation of the complex cross-correlation of the q-th code sequence of the first codeset and the q-th code sequence of the further codeset, which summation is carried out over the number of code sequences per codeset, is equal to zero for any desired discrete shift between the code sequences of the first codeset and the other codeset, including a zero shift, where q is the summation index.

2. Radar system according to Claim 1, wherein in the event of any component, corresponding to a potential radar object, that is contained in the radar echoes of the radar sensor (10) for the first vehicle (42) and comes from the transmission signal of a radar sensor (10") for another vehicle (46), which transmission signal is phase-modulated with at least one further codeset ($C_{q1}$, $C_{q2}$), radar echoes of the potential radar object are rejected for the summation on the basis of the codeset orthogonality condition.

3. Radar system according to either of Claims 1 and 2, wherein in said mode of operation of a respective radar sensor (10; 10"), separately for the partial transmission signals (47, 47'):

   - a respective first Fourier transformation (32i) of the respective radar echoes of the frequency modulation ramps (30; 30') of the partial transmission signal (47, 47') takes place,
   - the phase demodulation (34) is performed on the obtained one-dimensional spectra (33) of the radar echoes of the frequency modulation ramps (30; 30'),
   - a second Fourier transformation (38) is carried out in a second dimension by means of the time characteristic of the sequence of the phase-demodulated, one-dimensional spectra (33) of the radar echoes of the successive frequency modulation ramps (30; 30'), and

   wherein a summation (48) of the separately obtained two-dimensional spectra that takes into consideration the phases takes place, and
   wherein a distance (d) and/or a relative velocity (v) of a located object (44) is determined on the basis of a peak in the obtained, summed two-dimensional spectrum.

4. Radar system according to one of Claims 1 to 3, wherein the magnitudes of the values of the frequency spectra separately determined for the partial transmission signals are each proportional to the magnitude of the complex cross-correlation function of the code sequence ($C_{m1}$, $C_{m2}$) used for the phase modulation of the respective partial transmission signal and the code sequence ($C_{m1}$, $C_{m2}$) correlating with said code sequence and used for the phase demodulation given a shift of zero between the code sequences.

5. Radar system according to one of Claims 1 to 4, wherein the control and evaluation device (16) of the respective radar sensor (10) is designed so as, in said mode of operation, to use at least one first codeset ($C_{m1}$, $C_{m2}$) in at least one first measurement cycle and to use at least one further codeset ($C_{q1}$, $C_{q2}$) in at least one further measurement cycle,
wherein the first codeset ($C_{m1}$, $C_{m2}$) and the at least one further codeset ($C_{q1}$, $C_{q2}$) satisfy the codeset orthogonality condition.

6. FMCW radar sensor (10) for a vehicle (42; 46) of a motor vehicle fleet, for a radar system according to one of Claims 1 to 5, wherein the FMCW radar sensor (10) has a control and evaluation device (16) designed for a mode of operation in which a measurement cycle of the radar sensor (10, 10") involves at least two partial transmission signals (47, 47') being transmitted by the radar sensor (10, 10"), **characterized in that** the partial transmission signals each comprise a sequence of frequency modulation ramps (30; 30'),
wherein the respective partial transmission signal (47, 47') is phase-modulated in accordance with a code sequence ($C_{m1}$, $C_{m2}$) of a codeset by virtue of the frequency modulation ramps (30; 30') each obtaining a phase in accordance with an element of the code sequence ($C_{m1}$, $C_{m2}$) that is associated with the frequency modulation ramp,
wherein at least two associated code sequences ($C_{m1}$, $C_{m2}$) of the codeset for the at least two partial transmission signals (47, 47') are used for phase modulation,
wherein radar echoes of the partial transmission signals (47, 47') are separately phase-demodulated (34) and, for a respective partial transmission signal, a frequency spectrum of a Fourier analysis (32, 38) is determined in a first dimension by means of respective samples of a radar echo of a frequency modulation ramp (30; 30') and in a second dimension by means of the phase-demodulated sequence of the radar echoes of the successive frequency modulation ramps (30; 30') of the partial transmission signal (47, 47'),
wherein a distance (d) and/or a relative velocity (v) of a located object (44) is determined on the basis of a summation (48) of the frequency spectra separately determined for the partial transmission signals,
wherein the control and evaluation device (16) of the radar sensor (10) is designed so as, in said mode of operation, to use at least one first codeset ($C_{m1}$, $C_{m2}$) that, with at least one further codeset ($C_{q1}$, $C_{q2}$) used by a control and evaluation device of at least one other vehicle (46) in the vehicle fleet, satisfies the codeset orthogonality condition that a summation of the complex cross-correlation of the q-th code sequence of the first codeset and the q-th code sequence of the further codeset, which summation is carried out over the number of code sequences per codeset, is equal to zero for any desired discrete shift between the code sequences of the first codeset and the other codeset, including a zero shift, where q is the summation index.

**Revendications**

1. Système radar pour une flotte de véhicules, comprenant plusieurs capteurs radar FMCW (10, 10") pour un véhicule (42 ; 46) respectif de la flotte de véhicules, les capteurs radar FMCW (10, 10") possédant respectivement un dispositif de commande et d'interprétation (16) qui est conçu pour un mode de fonctionnement avec lequel au moins deux signaux d'émission partiels (47, 47') sont émis par le capteur radar (10, 10") dans un cycle de mesure du capteur radar (10, 10") respectif, **caractérisé en ce que** les signaux d'émission partiels comprennent respectivement une séquence de rampes de modulation de fréquence (30 ; 30'), le signal d'émission partiel (47, 47') respectif étant modulé en phase conformément à une séquence de codes ($C_{m1}$, $C_{m2}$) d'un jeu de codes **en ce que** les rampes de modulation de fréquence (30 ; 30') reçoivent respectivement une position de phase conformément à un élément de la séquence de codes ($C_{m1}$, $C_{m2}$) associé à la rampe de modulation de fréquence,
au moins deux séquences de codes ($C_{m1}$, $C_{m2}$) associées du jeu de codes étant utilisées pour la modulation de phase pour les au moins deux signaux d'émission partiels (47, 47'),
les échos radar des signaux d'émission partiels (47, 47') étant démodulés en phase (34) séparément et, pour un signal d'émission partiel respectif, un spectre de fréquences d'une analyse de Fourier (32, 38) étant déterminé dans une première dimension respectivement par le biais de valeurs d'échantillonnage d'un écho radar d'une rampe de modulation de fréquence (30 ; 30') et, dans une deuxième dimension, par le biais de la séquence démodulée en phase des échos radar des rampes de modulation de fréquence (30 ; 30') successives du signal d'émission partiel (47, 47'),
un écart (d) et/ou une vitesse relative (v) d'un objet (44) localisé étant déterminé à l'aide d'une sommation (48) des spectres de fréquences déterminés séparément pour les signaux d'émission partiels, et

le dispositif de commande et d'interprétation (16) d'un capteur radar (10) pour un premier véhicule (42) étant conçu pour utiliser au moins un premier jeu de codes ($C_{m1}$, $C_{m2}$) lors dudit mode de fonctionnement,
le dispositif de commande et d'interprétation (16) d'un capteur radar (10") pour au moins un autre véhicule (46) de la flotte de véhicules étant conçu pour utiliser au moins un jeu de codes supplémentaire ($C_{q1}$, $C_{q2}$) lors dudit mode de fonctionnement, et
l'au moins un premier jeu de codes ($C_{m1}$, $C_{m2}$) et l'au moins un jeu de codes supplémentaire ($C_{q1}$, $C_{q2}$) remplissant la condition d'orthogonalité de jeu de codes selon laquelle une sommation exécutée pour chaque jeu de codes sur la pluralité de séquences de codes de la corrélation croisée complexe de la q-ème séquence de codes du premier jeu de codes et de la q-ème séquence de codes du jeu de codes supplémentaire est égale à zéro pour chaque décalage discret quelconque entre les séquences de codes du premier et de l'autre jeu de codes, y compris un décalage nul, q désignant ici l'indice de sommation.

2. Système radar selon la revendication 1, avec lequel, dans le cas d'une éventuelle part contenue dans les échos radar du capteur radar (10) pour le premier véhicule (42), qui est issue du signal d'émission modulé en phase avec au moins un jeu de codes supplémentaire ($C_{q1}$, $C_{q2}$) d'un capteur radar (10") pour un autre véhicule (46), laquelle correspond à un objet radar potentiel, les échos radar de l'objet radar potentiel sont inhibés lors de la sommation en raison de la condition d'orthogonalité de jeu de codes.

3. Système radar selon l'une des revendications 1 ou 2,
avec lequel, lors dudit mode de fonctionnement d'un capteur radar (10, 10") respectif, les opérations suivantes sont effectuées séparément pour les signaux d'émission partiels (47, 47') :

- une première transformée de Fourier (32i) respective des échos radar des rampes de modulation de fréquence (30 ; 30') respectives des signaux d'émission partiels (47, 47'),
- la démodulation de phase sur les spectres (33) unidimensionnels obtenus des échos radar des rampes de modulation de fréquence (30 ; 30'),
- une deuxième transformée de Fourier (38) dans une deuxième dimension sur la courbe dans le temps de la séquence de spectres (33) unidimensionnels démodulés en phase des échos radar des rampes de modulation de fréquence (30 ; 30') successives, et

une sommation (48) qui tient compte des phases des spectres bidimensionnels obtenus séparément étant effectuée, et
un écart (d) et/ou une vitesse relative (v) d'un objet (44) localisé étant déterminé à l'aide d'une crête dans le spectre bidimensionnel totalisé obtenu.

4. Système radar selon l'une des revendications 1 à 3, les montants des valeurs des spectres de fréquences déterminés séparément pour les signaux d'émission partiels étant respectivement proportionnels au montant de la fonction de corrélation croisée complexe de la séquence de codes ($C_{m1}$, $C_{m2}$) utilisée pour la modulation de phase du signal d'émission partiel respectif et de la séquence de codes ($C_{m1}$, $C_{m2}$) corrélée avec celle-ci et utilisée pour la démodulation de phase avec un décalage nul entre les séquences de codes.

5. Système radar selon l'une des revendications 1 à 4, le dispositif de commande et d'interprétation (16) du capteur radar (10) respectif étant conçu pour, lors dudit mode de fonctionnement, utiliser au moins un premier jeu de codes ($C_{m1}$, $C_{m2}$) dans au moins un premier cycle de mesure et au moins un jeu de codes supplémentaire ($C_{q1}$, $C_{q2}$) dans au moins un cycle de mesure supplémentaire,
le premier jeu de codes ($C_{m1}$, $C_{m2}$) et l'au moins un jeu de codes supplémentaire ($C_{q1}$, $C_{q2}$) remplissant la condition d'orthogonalité de jeu de codes.

6. Capteur radar FMCW (10) pour un véhicule (42 ; 46) d'une flotte de véhicules, pour un système radar selon l'une des revendications 1 à 5, le capteur radar FMCW (10) possédant un dispositif de commande et d'interprétation (16) qui est conçu pour un mode de fonctionnement avec lequel au moins deux signaux d'émission partiels (47, 47') sont émis par le capteur radar (10, 10") dans un cycle de mesure du capteur radar (10, 10"), **caractérisé en ce que** les signaux d'émission partiels comprennent respectivement une séquence de rampes de modulation de fréquence (30 ; 30'),
le signal d'émission partiel (47, 47') respectif étant modulé en phase conformément à une séquence de codes ($C_{m1}$, $C_{m2}$) d'un jeu de codes **en ce que** les rampes de modulation de fréquence (30 ; 30') reçoivent respectivement une position de phase conformément à un élément de la séquence de codes ($C_{m1}$, $C_{m2}$) associé à la rampe de modulation de fréquence,

au moins deux séquences de codes ($C_{m1}$, $C_{m2}$) associées du jeu de codes étant utilisées pour la modulation de phase pour les au moins deux signaux d'émission partiels (47, 47'),

les échos radar des signaux d'émission partiels (47, 47') étant démodulés en phase (34) séparément et, pour un signal d'émission partiel respectif, un spectre de fréquences d'une analyse de Fourier (32, 38) étant déterminé dans une première dimension respectivement par le biais de valeurs d'échantillonnage d'un écho radar d'une rampe de modulation de fréquence (30 ; 30') et, dans une deuxième dimension, par le biais de la séquence démodulée en phase des échos radar des rampes de modulation de fréquence (30 ; 30') successives du signal d'émission partiel (47, 47'),

un écart (d) et/ou une vitesse relative (v) d'un objet (44) localisé étant déterminé à l'aide d'une sommation (48) des spectres de fréquences déterminés séparément pour les signaux d'émission partiels,

le dispositif de commande et d'interprétation (16) du capteur radar (10) étant conçu pour, lors dudit mode de fonctionnement, utiliser au moins un premier jeu de codes ($C_{m1}$, $C_{m2}$) qui, avec au moins un jeu de codes supplémentaire ($C_{q1}$, $C_{q2}$), lequel est utilisé par le dispositif de commande et d'interprétation d'au moins un autre véhicule (46) de la flotte de véhicules, remplit la condition d'orthogonalité de jeu de codes selon laquelle une sommation exécutée pour chaque jeu de codes sur la pluralité de séquences de codes de la corrélation croisée complexe de la q-ème séquence de codes du premier jeu de codes et de la q-ème séquence de codes du jeu de codes supplémentaire est égale à zéro pour chaque décalage discret quelconque entre les séquences de codes du premier et de l'autre jeu de codes, y compris un décalage nul, q désignant ici l'indice de sommation.

**Fig. 1**

**Fig. 2**

Fig. 3

**Fig. 4**

**Fig. 5**

Fig. 6

Fig. 7

$f^*_{m,1}$

$c^*_{m,1}$

32    34    38    48    40

s → FFT → ▢ → FFT → +  →  ▢

s → FFT → ▢ → FFT →

32    34    38

$c^*_{m,2}$

$f^*_{m,2}$

**Fig. 8**

42    Störsignal    46

10"

10

Nutzsignal

44

**Fig. 9**

Fig. 10

Fig. 11

**Fig. 12**

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005111655 A2
- DE 10100417 A1
- WO 2010115418 A2
- WO 2010000252 A2

**In der Beschreibung aufgeführte Nicht-Patentliteratur**

- Mismatched filtering of periodic quadriphase and 8-phase sequences. **LÜKE H D.** IEEE TRANSACTIONS ON COMMUNICATIONS. IEEE SERVICE CENTER, 01. Juli 2003, vol. 51, 1061-1063